# EUROPÄISCHE PATENTSCHRIFT

(11) **EP 2 673 655 B1**
(45) Veröffentlichungstag und Bekanntmachung des Hinweises auf die Patenterteilung: **06.11.2019**
(21) Anmeldenummer: 11802640.0
(22) Anmeldetag: 13.12.2011
(51) Int. Cl.: G01S 5/16, G01S 5/28, G01S 11/16, F41H 11/00, F41G 3/14

(54) **VERFAHREN UND VORRICHTUNG ZUR PASSIVEN POSITIONSERMITTLUNG**
METHOD AND DEVICE FOR PASSIVELY ASCERTAINING A POSITION
PROCÉDÉ ET DISPOSITIF DE DÉTERMINATION PASSIVE DE POSITION

(30) Priorität: 11.02.2011 DE 102011011073
(43) Veröffentlichungstag der Anmeldung: 18.12.2013
(73) Patentinhaber: Rheinmetall Defence Electronics GmbH, 28309 Bremen (DE)
(72) Erfinder: AMELSBERG, Heiko, 27804 Berne (DE); MARTENS, Christian, 28277 Bremen (DE); HEITMANN, Nils, 28876 O ten (DE)
(74) Vertreter: Greif, Thomas
(86) Internationale Anmeldenummer: PCT/EP2011/006266
(87) Internationale Veröffentlichungsnummer: WO 2012/107070

(56) Entgegenhaltungen:
- US-A- 3 878 729
- US-B1- 6 621 764
- US-B1- 7 409 899

## Beschreibung

Die vorliegende Erfindung betrifft ein Verfahren und einer Vorrichtung zur passiven Ermittlung der Position eines Objekts.

Insbesondere in der militärischen Aufklärung ist es notwendig, die Position eines Objekts, beispielsweise eines Luftfahrzeugs aber auch einer Person, zu ermitteln, also das Objekt zu orten. Dies erfolgt beispielsweise per Radar oder Laserentfernungsmesser. Dabei handelt es sich jedoch um eine aktive Ortung, bei der ein ausgesendetes Signal reflektiert oder zurückgestreut wird. Eine Ortung mittels derartiger Vorrichtungen ist somit durch das zu ortende Objekt detektierbar.

Eine passive Ortung, also eine Ortung, bei der ausschließlich von dem zu ortenden Objekt ausgehende Informationen oder Signale verwendet werden, ist ebenfalls bekannt. In einer Variante wird aus der Größe eines Objekts auf dessen Entfernung geschlossen. Dies ist jedoch für viele Anwendungen zu ungenau. Eine weitere Variante besteht in einer Triangulation, die jedoch räumlich entfernte Detektoren und eine Kommunikationsverbindung dazwischen voraussetzt.

US 6,621,764 B1 offenbart ein Verfahren zur passiven Ermittlung der Position eines Objekts, wobei von dem Objekt akustische und optische Signale ausgehen.

Es ist daher die Aufgabe der vorliegenden Erfindung, ein Verfahren und eine Vorrichtung zur passiven Ermittlung der Position eines Objekts bereitzustellen, das beziehungsweise die zumindest einige der vorgenannten Nachteile nicht aufweist. Diese Ausgabe wird gelöst durch die unabhängigen Patentansprüche. Vorteilhafte Ausgestaltungsformen sind in den abhängigen Patentansprüchen angegeben.

Das erfindungsgemäße Verfahren zur passiven Ermittlung der Position eines Objekts weist als ersten Verfahrensschritt das Ermitteln von Peilungsdaten auf. Die Peilungsdaten enthalten die Richtung des Objekts und den Zeitpunkt der Peilung. Die Richtung des Objekts ist der Einfallsrichtung eines von dem Objekt ausgehenden Signals entgegengesetzt und bezieht sich auf eine Vorrichtung, mit der das Signal detektiert wird. Die Richtung ist bevorzugt in Form von zwei Winkeln angegeben, beispielsweise in einem Kugelkoordinatensystem, und wird insbesondere durch Azimut und Elevation beschrieben. Der Zeitpunkt der Peilung ist der Zeitpunkt, an dem das Signal detektiert wird. Dies ist üblicherweise nicht der Zeitpunkt, zu dem das Signal von dem Objekt ausgeht.

Erfindungsgemäß werden zwei unterschiedliche Arten von Peilungsdaten ermittelt, nämlich akustische Peilungsdaten und optische Peilungsdaten. Akustische Peilungsdaten ergeben sich aus der Einfallsrichtung eines akustischen Signals, also von Schall. Optische Peilungsdaten ergeben sich aus der Einfallsrichtung eines optischen Signals, beispielsweise im sichtbaren und/oder infraroten Spektrum. Somit werden sowohl akustische als auch optische Signale empfangen und mit dem Zeitpunkt des Empfangs versehen als Peilungsdaten ermittelt. Die Peilungsdaten der unterschiedlichen Arten werden gespeichert, beispielsweise als akustisches oder optisches Peilungsdatentupel.

Dann werden Peilungsdaten unterschiedlicher Art als derselben Peilung zugehörig identifiziert. Es handelt sich um derselben Peilung zugehörige Peilungsdaten, wenn die den Peilungsdaten zugrundeliegenden, empfangenen Signale durch dasselbe Ereignis erzeugt wurden, also zu derselben Zeit von derselben Position ausgehen. Einer Peilung zugehörige Peilungsdaten sind somit auch einem Ereignis zugehörige Peilungsdaten. Ein Ereignis ist beispielsweise das Abfeuern einer Waffe, das einerseits einen Knall und andererseits einen Mündungsblitz erzeugt. Ein weiteres Beispiel für ein Ereignis ist die Präsenz eines Objekts an einem bestimmten Ort, wo es zu einem Zeitpunkt einerseits Licht ausstrahlt oder reflektiert und andererseits ein akustisches Signal erzeugt. Es wird also ein Paar aus optischen Peilungsdaten und akustischen Peilungsdaten bestimmt, das sich auf Signale bezieht, die demselben Ereignis entstammen.

Die optischen und akustischen Signale, die gleichzeitig von einem Objekt ausgehen, werden aufgrund ihrer Laufzeitunterschiede zu unterschiedlichen Zeiten detektiert. Die Zeitpunkte, die in den optischen und akustischen Peilungsdaten derselben Peilung enthalten sind, unterscheiden sich also. Aus dem Zeitunterschied der Zeitpunkte der als derselben Peilung zugehörig identifizierten Peilungen wird die Entfernung des Objekts berechnet, beispielsweise indem der Zeitunterschied mit der Schallgeschwindigkeit multipliziert wird. Aus der aus den Peilungsdaten bekannten Richtung und der berechneten Entfernung wird nun die Position des Objekts berechnet, beispielsweise in Kugelkoordinaten in einem Koordinatensystem, in dessen Nullpunkt bevorzugt die Vorrichtung liegt.

Sowohl die optische als auch die akustische Peilung erlauben für sich genommen nur die Bestimmung der Einfallsrichtung des Lichts beziehungsweise des Schalls, und damit die Ermittlung der Richtung des Objekts. Durch die Kombination beider Peilungsarten ist zusätzlich ein Laufzeitunterschied bekannt, aus dem die Entfernung und damit die vollständige Position des Objekts berechnet werden kann.

Bevorzugt werden Peilungsdaten unterschiedlicher Art nur dann als derselben Peilung zugehörig identifiziert, wenn die Richtungen in den Peilungsdaten übereinstimmen, also das Licht und der Schall aus derselben Richtung einfallen. Die gleiche Einfallsrichtung ist eine notwendige, aber keine hinreichende Bedingung. Durch sie wird ausgeschlossen, dass beispielsweise Reflektionen eines Signals die Laufzeitdifferenz und somit die Entfernungsbestimmung beeinträchtigen.

In einer bevorzugten Ausgestaltungsform wird die Richtung der optischen Peilungsdaten aus dem Bild einer Kamera bestimmt. Bei der Kamera kann es sich um eine Kamera mit einem Empfangsspektrum im sichtbaren und/oder infraroten Bereich handeln. Sind die Ausrichtung und die optischen Abbildungseigenschaften der Kamera bekannt, so kann aus der Position der Bildpunkte, die das Objekt darstellen, die Richtung des Objekts bestimmt werden. Optional wird auch die Präsenz des Objekts in dem Bild der Kamera detektiert, beispielsweise anhand eines hinterlegten Bildmusters, wie dem Umriss, des Objekts. Bei dem Bild kann es sich um ein bewegtes Bild (Videobild) oder um ein Standbild handeln.

Erfindungsgemäß wird die Position des Objekts über einen Zeitraum ermittelt. Das bedeutet, dass die Position des Objekts über die Zeit getrackt wird. Somit ist die Trajektorie des Objekts bekannt. Weiter erfindungsgemäß wird die Geschwindigkeit des Objekts aus der Entwicklung der Position des Objekts über die Zeit ermittelt.

Erfindungsgemäß werden Peilungsdaten unterschiedlicher Art nur dann als derselben Peilung zugehörig identifiziert, wenn die Signalmuster des akustischen und des optischen Signals korrespondieren. Dazu sind die Signalmuster und deren Zuordnung bevorzugt in einer Datenbank oder einem Speicher hinterlegt. Das Abfeuern einer Waffe erzeugt beispielsweise ein Mündungsfeuer und einen Knall, die nur wenige Millisekunden lang sind und charakteristische akustische und optische Signalmuster erzeugen. Ein Fahrzeug hat beispielsweise einen bekannten Umriss, der ein bekanntes optisches Signalmuster erzeugt, und erzeugt ein Motorgeräusch mit einem charakteristischen akustischen Signalmuster. Nur wenn diese Signalmuster als zusammengehörig erkannt werden, werden die Peilungsdaten als derselben Peilung zugehörig identifiziert.

Die vorliegende Erfindung betrifft weiterhin eine Vorrichtung zur passiven Ermittlung der Position eines Objekts, aufweisend eine Recheneinrichtung, einen Speicher, eine Kamera und einen akustischen Detektor, der dazu eingerichtet ist, die Einfallsrichtung des detektierten Schalls zu ermitteln. Die Recheneinrichtung ist dazu eingerichtet, Peilungsdaten zu ermitteln, wobei die Peilungsdaten die Richtung des Objekts und den Zeitpunkt der Peilung enthalten und zwei unterschiedliche Arten von Peilungsdaten ermittelt werden, nämlich akustische Peilungsdaten anhand des akustischen Detektors und optische Peilungsdaten anhand der Kamera, die Peilungsdaten im Speicher zu speichern, Peilungsdaten unterschiedlicher Art als derselben Peilung zugehörig zu identifizieren, die Entfernung des Objekts aus dem Zeitunterschied der Zeitpunkte der als derselben Peilung zugehörig identifizierten Peilungen zu berechnen und die Position des Objekts aus der Richtung und der Entfernung des Objekts zu berechnen.

In einer Ausgestaltungsform der Erfindung ist der akustische Detektor ein phasengesteuertes Mikrofonarray. Ein solches Array besteht aus einer Mehrzahl von Mikrofonen, wobei aus der Laufzeitdifferenz eines akustischen Signals zu den verschiedenen Mikrofonen auf die Einfallsrichtung des Schalls geschlossen werden kann.

Bevorzugt ist die Recheneinrichtung dazu eingerichtet, Peilungsdaten unterschiedlicher Art nur dann als derselben Peilung zugehörig zu identifizieren, wenn die Richtungen der Peilungen übereinstimmen.

Erfindungsgemäß ist die Recheneinrichtung dazu eingerichtet, die Position des Objekts über einen Zeitraum zu ermitteln. Weiterhin optional ist die Recheneinrichtung dazu eingerichtet, die Geschwindigkeit des Objekts aus der Entwicklung der Position des Objekts über die Zeit zu ermitteln.

Erfindungsgemäß ist die Recheneinrichtung dazu eingerichtet, Peilungsdaten unterschiedlicher Art nur dann als derselben Peilung zugehörig zu identifizieren, wenn die Signalmuster des akustischen und des optischen Signals korrespondieren.

Die Vorrichtung, insbesondere die Recheneinheit, ist dazu eingerichtet, das ausführlich beschriebene Verfahren auszuführen, weshalb auf eine detaillierte Wiederholung der Beschreibung verzichtet wird.

Dabei zeigt:
Figur 1 den schematischen Aufbau einer erfindungsgemäßen Vorrichtung und
Figur 2 ein beispielhaftes Detektionsszenario.

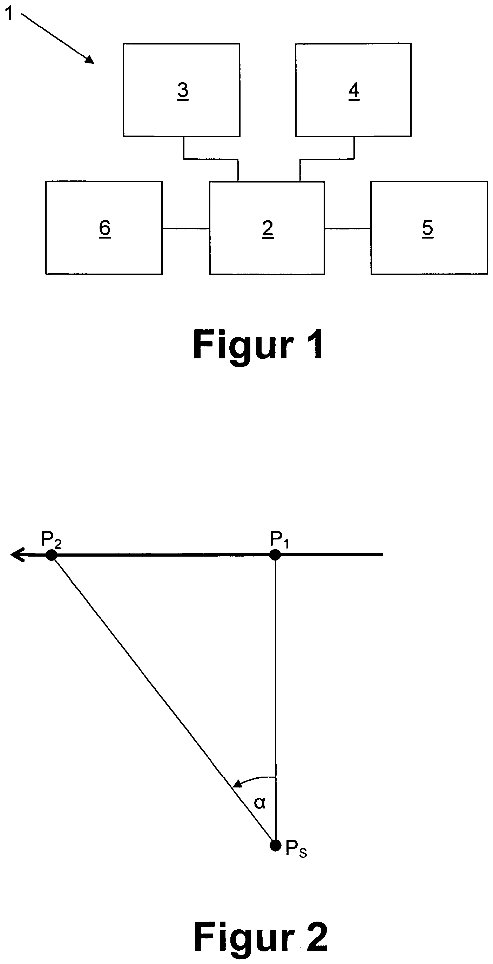

Die Figur 1 zeigt schematisch eine erfindungsgemäße Vorrichtung 1 zur passiven Ermittlung der Position eines Objekts. Die Vorrichtung 1 weist eine Recheneinrichtung 2 auf, die auch die Steuerung der Vorrichtung 1 durchführt, sowie eine Kamera 3, ein Mikrofonarray 4, einen Monitor 5 und einen Speicher 6. Die Kamera 3 ist eine Tagsichtkamera mit einem Empfangsspektrum im sichtbaren Bereich. Im Speicher 6 sind Signalmuster, die auch als Signaturen bezeichnet werden, für optische und akustische Signale hinterlegt, wie sie von zu ortenden Objekten ausgehen. In dem Speicher 6 ist auch eine Zuordnung der Signalmuster zu Objekten oder Objekttypen gespeichert.

Die Kamera 3, das Mikrofonarray 4, der Monitor 5 und der Speicher 6 sind datentechnisch mit der Recheneinrichtung 2 verbunden, können also Daten in mindestens eine Richtung mit der Recheneinrichtung 2 austauschen. Die Kamera 3 und das Mikrofonarray 4 sind bevorzugt über einen gemeinsamen Datenbus mit der Recheneinrichtung 2 verbunden.

Die Kamera 3 ist dazu eingerichtet, ein Standbild oder Bewegtbild aufzunehmen und an die Recheneinrichtung 2 zu übertragen. In dem Bild der Kamera 3 ermittelt die Recheneinrichtung 2 die Koordinaten derjenigen Bildpunkte, die ein zu ortendes oder zu verfolgendes Objekt darstellen. Dazu wird beispielsweise ein an sich bekannter Bildverarbeitungsalgorithmus verwendet. Aus der bekannten Ausrichtung der Kamera 3 und deren optischen Eigenschaften kann nun die Richtung, in der sich das Objekt von der Vorrichtung 1 aus befindet, berechnet werden. Die Richtung zusammen mit dem Zeitpunkt der Bildaufnahme wird als optisches Peilungsdatentupel (Rₒ, tₒ) im Speicher 6 gespeichert. Dabei ist Rₒ die Einfallsrichtung, die bevorzugt wieder ein 2-Tupel mit zwei Einfallswinkeln in zueinander orthogonalen Ebenen ist, beispielsweise Elevation und Azimut. Mit tₒ wird der Zeitpunkt der Messung, also der Bildaufnahme, bezeichnet. Bei wiederholter Bildauswertung werden die Peilungsdatentupel indiziert als (R_{o,i}, t_{o,i}) gespeichert. Optional wird in dem Peilungsdatentupel auch eine Identifikation des erfassten Objekts gespeichert.

Das Bild der Kamera 3 wird von der Recheneinrichtung 2 auf dem Monitor 5 dargestellt. Bevorzugt macht die Recheneinrichtung 2 in dem auf dem Monitor dargestellten Bild die Bildkoordinaten, bei denen das Objekt detektiert wurde, deutlich, beispielsweise durch Einblenden eines Fadenkreuzes an der Position des Objekts in dem Bild. Optional kann ein Benutzer die detektierte Position korrigieren, beispielsweise über eine Tastatur, eine Maus oder einen Joystick, bevor die Richtung des Objekts ermittelt und gespeichert wird.

Das Mikrofonarray 4 ist dazu eingerichtet, von einem Objekt ausgehenden Schall zu detektieren und eine entsprechende Information an die Recheneinrichtung 2 zu übertragen. Bei der Information kann es sich um die Rohdaten der Mikrofone des Arrays handeln, aus denen die Recheneinrichtung 2 die Einfallsrichtung des Schalls berechnet. Alternativ wird die Einfallsrichtung des Schalls von einer Elektronik des Mikrofonarrays berechnet und an die Recheneinrichtung 2 übertragen. Die Richtung, in der sich das Objekt von der Vorrichtung 1 aus gesehen befindet, ist der Einfallsrichtung des Schalls entgegengesetzt. Die Richtung wird zusammen mit dem Zeitpunkt des Eintreffens des Schalls als akustisches Peilungsdatentupel (Rₐ, tₐ) im Speicher 6 gespeichert. Bei wiederholter Auswertung des eintreffenden Schalls werden die Peilungsdatentupel indiziert als (R_{a,i}, t_{a,i}) gespeichert. Die Zeitpunkte t_{a,i} beziehungsweise t_{o,i} sind beispielsweise äquidistant. Alternativ wird ein akustisches Peilungsdatentupel erzeugt und gespeichert, wenn ein akustisches Signal aus einer Richtung einfällt, aus der bereits ein optisches Signal eingefallen ist. Optional wird in dem Peilungsdatentupel auch eine Identifikation des erfassten Objekts gespeichert.

Aus den gespeicherten Peilungsdatentupeln ermittelt die Recheneinrichtung 2 ein Paar aus einem akustischen und einem optischen Peilungsdatentupel, die derselben Peilung zugehörig sind. Dies sind Peilungsdatentupel, die Peilungen repräsentieren, die von demselben Ereignis stammen. Ein Ereignis ist beispielsweise das Abfeuern einer Waffe oder der Aufenthalt eines Objekts an einer Position. Die Aussendung der akustischen und optischen Signale, die von der Kamera 3 und dem Mikrofonarray 4 erfasst und von der Recheneinrichtung in Peilungsdatentupel umgesetzt wurden, von dem Objekt erfolgte also gleichzeitig und von demselben Ort.

Das Eintreffen der von einem Schuss oder einem an einem Ort befindlichen Objekt gleichzeitig ausgehenden optischen und akustischen Signale wurde in Peilungsdatentupeln (R_{o,i}, t_{o,i}) und (R_{a,j}, t_{a,j}) gespeichert, die als zusammengehörig identifiziert wurden. Die Richtungen R_{o,i} und R_{a,j} stimmen überein. Die Zeitdifferenz Δt=t_{o,j}-t_{a,i} wird mit der Schallgeschwindigkeit c multipliziert, um die Entfernung des Objekts zu berechnen. Dabei wird bevorzugt die Laufzeit des optischen Signals vom Objekt zur Kamera 3 ignoriert. Die Position des Objekts ergibt sich nun aus seiner Richtung und seiner Entfernung bezogen auf die Vorrichtung 1.

Die Figur 2 zeigt ein beispielhaftes Detektionsszenario. Darin bewegt sich ein Objekt geradlinig in Richtung des Pfeils. An der Position P₁ geht von dem Objekt sowohl ein optisches Signal, beispielsweise von dem Objekt reflektiertes oder gestreutes Licht, als auch ein akustisches Signal, beispielsweise ein Motorengeräusch, aus. Die Signale werden von der Kamera 3 und dem Mikrofonarray 4 an der Position P_{S} der Vorrichtung 1 empfangen, von der Recheneinrichtung 2 ausgewertet und im Speicher 6 als Peilungsdatentupel (R_{o,1}, t_{o,1}) und (R_{a,2}, t_{a,2}) gespeichert. Dabei ist R_{o,1}=R_{a,2}, t_{o,1}=0s und t_{a,2}=10s. Bei der Position P₂ gehen von dem Objekt wieder ein akustisches und ein optisches Signal aus, die als Peilungsdatentupel (R_{o,2}, t_{o,2}) und (R_{a,3}, t_{a,3}) gespeichert werden. Dabei ist R_{o,2}=R_{a,3} und t_{o,2}=10s. t_{a,3} wird zu 21,6s gemessen. Der Winkel α zwischen den Richtungen R_{o,1}=R_{a,2} und R_{o,2}=R_{a,3} beträgt 30,5°.

Die Recheneinrichtung erkennt die Peilungsdatentupel (R_{o,1}, t_{o,1}) und (R_{a,2}, t_{a,2}) als derselben Peilung zugehörig, die aufgrund der Laufzeitunterschiede des optischen und des akustischen Signals zu unterschiedlichen Zeitpunkten t_{o,1} und t_{a,2} detektiert wird. Die Entfernung zwischen der Vorrichtung 1 und dem Punkt P₁ wird mit c=340m/s, t_{o,1}=0s und t_{a,2}=10s zu d₁=3400m berechnet. Die Position P₁ bestimmt sich aus der Richtung R_{o,1} und der Entfernung d₁.

Weiterhin erkennt die Recheneinrichtung die Peilungsdatentupel (R_{o,2}, t_{o,2}) und (R_{a,3}, t_{a,3}) als derselben Peilung zugehörig. Die Entfernung zwischen der Vorrichtung 1 und dem Punkt P₂ wird mit c=340m/s, t_{o,2}=10s und t_{a,3}=21,6s zu d₂=3944m berechnet. Die Position P₂ bestimmt sich aus der Richtung R_{o,2} und der Entfernung d₂. Aus der Entfernung der Punkte P₁ und P₂ und der Zeitdifferenz t_{o,2}-t_{o,1} (gleich t_{a,3}-t_{a,2}) berechnet sich die Geschwindigkeit des Objekts zu 200m/s. Bevorzugt wird die Entfernung und optional die Geschwindigkeit des Objekts in das auf dem Monitor 5 dargestellte Bild der Kamera 3 eingeblendet. Optional wird aus einer Menge von Positionen des Objekts über die Zeit die Trajektorie des Objekts berechnet und gegebenenfalls extrapoliert.

Wenn es sich bei dem zu ortenden Objekt um einen Schützen oder eine stationäre Waffe handelt, erzeugt das Abfeuern der Waffe einen Mündungsblitz und einen Knall, die zu unterschiedlichen Zeiten, aber aus derselben Richtung auf die Vorrichtung treffen. Die Recheneinrichtung 2 erzeugt dann beispielsweise jeweils nur ein akustisches und ein optisches Peilungsdatentupel, aus denen die Position des Schützen beziehungsweise der Waffe ermittelt wird.

Als weitere Option bei der Identifizierung von Peilungsdaten unterschiedlicher Art als derselben Peilung zugehörig berücksichtigt die Recheneinrichtung 2 die akustischen und optischen Signalmuster der von dem Objekt ausgehenden Signale. Aus dem Muster kann ein Objekt beziehungsweise ein Typ des Objekts identifiziert werden. Peilungsdaten werden nur als derselben Peilung zugehörig angesehen, wenn die Identifikation des Objekts, wie sie beispielsweise in den Peilungsdatentupeln gespeichert ist, für beide Peilungsdatentupel übereinstimmt.

## Patentansprüche

1. Verfahren zur passiven Ermittlung der Position eines Objekts, wobei von dem Objekt akustische und optische Signale ausgehen, aufweisend die Verfahrensschritte Ermitteln von Peilungsdaten, wobei die Peilungsdaten die Richtung des Objekts und den Zeitpunkt der Peilung enthalten und zwei unterschiedliche Arten von Peilungsdaten ermittelt werden, nämlich akustische Peilungsdaten und optische Peilungsdaten, Speichern der Peilungsdaten, Identifizieren von Peilungsdaten unterschiedlicher Art als derselben Peilung zugehörig, Berechnen der Entfernung des Objekts aus dem Zeitunterschied der Zeitpunkte der als derselben Peilung zugehörig identifizierten Peilungen und Berechnen der Position des Objekts aus der Richtung und der Entfernung des Objekts,
**dadurch gekennzeichnet, dass** die Position des Objekts über einen Zeitraum ermittelt wird, dass die Geschwindigkeit des Objekts aus der Entwicklung der Position des Objekts über die Zeit ermittelt wird und dass Peilungsdaten unterschiedlicher Art nur dann als derselben Peilung zugehörig identifiziert werden, wenn die Signalmuster des akustischen und des optischen Signals korrespondieren.

2. Verfahren nach Anspruch 1, wobei Peilungsdaten unterschiedlicher Art nur dann als derselben Peilung zugehörig identifiziert werden, wenn auch die Richtungen der Peilungen übereinstimmen.

3. Verfahren nach Anspruch 1 oder 2, **dadurch gekennzeichnet, dass** die Richtung der optischen Peilungsdaten aus dem Bild einer Kamera bestimmt wird.

4. Vorrichtung (1) zur passiven Ermittlung der Position eines Objekts, wobei von dem Objekt akustische und optische Signale ausgehen, aufweisend eine Recheneinrichtung (2), einen Speicher (6), eine Kamera (3) und einen akustischen Detektor (4), der dazu eingerichtet ist, die Einfallsrichtung des detektierten Schalls zu ermitteln, wobei die Recheneinrichtung (2) dazu eingerichtet ist, Peilungsdaten zu ermitteln, wobei die Peilungsdaten die Richtung des Objekts und den Zeitpunkt der Peilung enthalten und zwei unterschiedliche Arten von Peilungsdaten ermittelt werden, nämlich akustische Peilungsdaten anhand des akustischen Detektors (4) und optische Peilungsdaten anhand der Kamera (3), die Peilungsdaten im Speicher (6) zu speichern, Peilungsdaten unterschiedlicher Art als derselben Peilung zugehörig zu identifizieren, die Entfernung des Objekts aus dem Zeitunterschied der Zeitpunkte der als derselben Peilung zugehörig identifizierten Peilungen zu berechnen und die Position des Objekts aus der Richtung und der Entfernung des Objekts zu berechnen,
**dadurch gekennzeichnet, dass** die Recheneinrichtung (2) dazu eingerichtet ist, die Position des Objekts über einen Zeitraum sowie die Geschwindigkeit des Objekts aus der Entwicklung der Position des Objekts über die Zeit zu ermitteln und dass die Recheneinrichtung (2) dazu eingerichtet ist, Peilungsdaten unterschiedlicher Art nur dann als derselben Peilung zugehörig zu identifizieren, wenn die Signalmuster des akustischen und des optischen Signals korrespondieren.

5. Vorrichtung (1) nach Anspruch 4, **dadurch gekennzeichnet, dass** der akustische Detektor (4) ein phasengesteuertes Mikrofonarray ist.

6. Vorrichtung (1) nach Anspruch 4 oder 5, **dadurch gekennzeichnet, dass** die Recheneinrichtung (2) dazu eingerichtet ist, Peilungsdaten unterschiedlicher Art nur dann als derselben Peilung zugehörig zu identifizieren, wenn auch die Richtungen der Peilungen übereinstimmen.

## Claims

1. Method for passively ascertaining the position of an object, wherein acoustic and optical signals are emitted by the object, including the method steps of ascertaining bearing data, wherein the bearing data contain the direction of the object and the time point at which the bearing was taken and two different types of bearing data are ascertained, specifically acoustic bearing data and optical bearing data, storing the bearing data, identifying bearing data of different types as belonging to the same taking of the bearing, calculating the distance of the object from the time difference between the time points at which the bearings that have been identified as belonging to the same taking of the bearing were taken, and calculating the position of the object from the direction and the distance of the object,
**characterized in that** the position of the object is ascertained over a time period, **in that** the velocity of the object is ascertained from the development of the position of the object over time, and **in that** bearing data of different types are identified as belonging to the same taking of the bearing only if the signal patterns of the acoustic and of the optical signals correspond.

2. Method according to Claim 1, wherein bearing data of different types are identified as belonging to the same taking of the bearing only if the bearing directions also coincide.

3. Method according to Claim 1 or 2, **characterized in that** the direction of the optical bearing data is determined from the image of a camera.

4. Apparatus (1) for passively ascertaining the position of an object, wherein acoustic and optical signals are emitted by the object, including a computing device (2), a memory (6), a camera (3) and an acoustic detector (4), which is set up to ascertain the direction of incidence of the detected sound, wherein the computing device (2) is set up to ascertain bearing data, wherein the bearing data contain the direction of the object and the time point at which the bearing was taken and two different types of bearing data are ascertained, specifically acoustic bearing data using the acoustic detector (4) and optical bearing data using the camera (3), to store the bearing data in the memory (6), to identify bearing data of different types as belonging to the same taking of the bearing, to calculate the distance of the object from the time difference between the time points at which the bearings that have been identified as belonging to the same taking of the bearing were taken, and to calculate the position of the object from the direction and the distance of the object,
**characterized in that** the computing device (2) is set up to ascertain the position of the object over a time period and the velocity of the object from the development of the position of the object over time, and **in that** the computing device (2) is set up to identify bearing data of different types as belonging to the same taking of the bearing only if the signal patterns of the acoustic and of the optical signals correspond.

5. Apparatus (1) according to Claim 4, **characterized in that** the acoustic detector (4) is a phase-controlled microphone array.

6. Apparatus (1) according to Claim 4 or 5, **characterized in that** the computing device (2) is set up to identify bearing data of different types as belonging to the same taking of the bearing only if the bearing directions also coincide.

## Revendications

1. Procédé de détermination passive de la position d'un objet, des signaux acoustiques et optiques émanant de l'objet, comprenant les étapes de procédé suivantes :
détermination de données de relèvement, les données de relèvement contenant la direction de l'objet et l'instant du relèvement et deux types différents de données de relèvement étant déterminés, à savoir des données de relèvement acoustiques et des données de relèvement optiques, enregistrement des données de relèvement,
identification des données de relèvement de différents types comme appartenant au même relèvement, calcul de la distance de l'objet à partir de la différence de temps entre les instants des relèvements identifiés comme appartenant au même relèvement et calcul de la position de l'objet à partir de la direction et de la distance de l'objet,
**caractérisé en ce que** la position de l'objet est déterminée sur une période, **en ce que** la vitesse de l'objet est déterminée à partir du développement dans le temps de la position de l'objet et **en ce que** des données de relèvement de différents types ne sont identifiées comme appartenant au même relèvement que lorsque les modèles de signal du signal acoustique et optique se correspondent.

2. Procédé selon la revendication 1, des données de relèvement de différents types n'étant identifiées comme appartenant au même relèvement que lorsque les directions des relèvements coïncident elles aussi.

3. Procédé selon la revendication 1 ou 2, **caractérisé en ce que** la direction des données de relèvement optiques est définie à partir de l'image d'une caméra.

4. Arrangement (1) de détermination passive de la position d'un objet, des signaux acoustiques et optiques émanant de l'objet, comprenant un dispositif de calcul (2), une mémoire (6), une caméra (3) et un détecteur acoustique (4) qui est conçu pour déterminer la direction d'incidence du son détecté, le dispositif de calcul (2) étant conçu pour déterminer des données de relèvement, les données de relèvement contenant la direction de l'objet et l'instant du relèvement et deux types différents de données de relèvement étant déterminés, à savoir des données de relèvement acoustiques à l'aide du détecteur acoustique (4) et des données de relèvement optiques à l'aide de la caméra (3), enregistrer les données de relèvement dans la mémoire (6), identifier les données de relèvement de différents types comme appartenant au même relèvement, calculer la distance de l'objet à partir de la différence de temps entre les instants des relèvements identifiés comme appartenant au même relèvement et calculer la position de l'objet à partir de la direction et de la distance de l'objet, **caractérisé en ce que**
le dispositif de calcul (2) est conçu pour déterminer la position de l'objet sur une période ainsi que la vitesse de l'objet à partir du développement dans le temps de la position de l'objet et **en ce que** le dispositif de calcul (2) est conçu pour n'identifier des données de relèvement de différents types comme appartenant au même relèvement que lorsque les modèles de signal du signal acoustique et optique se correspondent.

5. Arrangement (1) selon la revendication 4, **caractérisé en ce que** le détecteur acoustique (4) est un réseau de microphones commandé en phase.

6. Arrangement (1) selon la revendication 4 ou 5, **caractérisé en ce que** le dispositif de calcul (2) est conçu pour n'identifier des données de relèvement de différents types comme appartenant au même relèvement que lorsque les directions des relèvements coïncident elles aussi.
